# FASCICULE DE BREVET EUROPEEN

(11) **EP 3 335 122 B1**
(45) Date de publication et mention de la délivrance du brevet: **27.11.2019**
(21) Numéro de dépôt: 16757692.5
(22) Date de dépôt: 19.07.2016
(51) Int. Cl.: G06F 11/30, G06F 11/32, G06F 11/34

(54) **SYSTÈME DE SURVEILLANCE POUR SUPERCALCULATEUR UTILISANT DES DONNÉES TOPOLOGIQUES**
ÜBERWACHUNGSSYSTEM FÜR SUPERRECHNER UNTER VERWENDUNG VON TOPOLOGISCHE DATEN
SUPERCOMPUTER MONITORING SYSTEM USING TOPOLOGICAL DATA

(30) Priorité: 13.08.2015 FR 1557708
(43) Date de publication de la demande: 20.06.2018
(73) Titulaire: Bull SAS, 78340 Les Clayes-sous-Bois (FR)
(72) Inventeur: MIQUEE, Sébastien, 91290 Arpajon (FR); BRATU, Ben, 78000 Versailles (FR); ANDRIAMBELO RAZAFIARISON, Ravaka, 91290 Arpajon (FR)
(74) Mandataire: Novagraaf Technologies
(86) Numéro de dépôt international: PCT/FR2016/051861
(87) Numéro de publication internationale: WO 2017/025672

(56) Documents cités:
- EP-A1- 2 267 940
- WO-A1-2012/047757
- WO-A1-2015/020648
- US-A1- 2015 052 441

## Description

### DOMAINE DE L'INVENTION

L'invention est relative au domaine des supercalculateurs. Plus précisément, elle concerne la surveillance de tels supercalculateurs.

### CONTEXTE DE L'INVENTION

Un supercalculateur (ou superordinateur) est un système de traitement de l'information destiné à atteindre les plus hautes performances possibles pour le traitement de l'information. Les supercalculateurs sont des systèmes coûteux qui trouvent des applications dans des domaines spécifiques : prévisions météorologiques, modélisation moléculaire, simulations physiques ou mécaniques, calcul dans le domaine nucléaire... On trouve également des applications dans le domaine de la finance, dans le domaine militaire, etc.

Ces supercalculateurs sont, d'une façon générale, constitués d'une interconnexion d'un très grand nombre d'équipements. Ces équipements comprennent des nœuds de traitement (ou microprocesseurs), des nœuds de routage (ou routeurs), des nœuds de gestion, etc.

Ces dernières années les supercalculateurs ont atteint des puissances de l'ordre du peta-FLOPS (ou PFLOPS), le FLOP (pour « Floating Point Opérations Per Seconds ») étant l'unité de mesure communément admise pour évaluer la puissance d'un supercalculateur. Afin d'atteindre de tels niveaux de puissance, ces supercalculateurs peuvent comporter plusieurs centaines de milliers d'équipements interconnectés.

Les prochaines générations de supercalculateurs sont prévues pour atteindre l'exa-FLOPS, soit un ordre de 10¹⁸ FLOPS. De tels supercalculateurs devraient comporter plusieurs dizaines de millions d'équipements.

Des systèmes de gestion et de surveillance ont été élaborés afin de permettre à un opérateur de détecter des dysfonctionnements du supercalculateur, mais aussi de pouvoir comprendre les causes d'un dysfonctionnement et d'ainsi pouvoir y remédier.

Des sondes sont associées aux équipements afin de recueillir des données de fonctionnement, en général sous la forme de compteurs. Ces données de fonctionnement peuvent être notamment représentatives d'un statut (taux d'erreurs, etc.) ou des tâches en cours.

Les valeurs de ces sondes ou compteurs peuvent être rendues disponibles à un dispositif de surveillance, permettant à un opérateur de les visualiser. Classiquement, la tâche de l'opérateur d'un supercalculateur consiste à naviguer parmi les données disponibles pour déterminer les problèmes ou rechercher les causes de problèmes.

Dès lors que le nombre de sondes est important, cette tâche devient très complexe, voire impossible s'il veut pouvoir réagir rapidement à un problème.

Des outils de visualisation ont été développés, comme l'outil « Graphite » par exemple. Cet outil offre une interface de type « web » permettant de naviguer parmi l'ensemble des valeurs des sondes. Graphite permet en outre d'organiser les sondes sous une forme arborescente afin de faciliter leur accès et d'appliquer des fonctions sur les valeurs remontées.

Toutefois, si un tel outil permet une visualisation graphique, via une interface web, il ne permet pas de déterminer quels sont les sondes à surveiller pour déterminer les éventuels problèmes.

Il est également possible de définir un sous-ensemble pertinent de sondes dont les valeurs sont visualisées, et actualisées, sur une interface graphique, ou tableau de bord («*dashboard*» en langue anglaise). La surveillance des valeurs des sondes de ce sous-ensemble est alors supposée suffire pour déterminer l'état, à un instant donné, du supercalculateur et de déceler les problèmes et/ou de déterminer leur cause.

Toutefois, la tâche de déterminer ce sous-ensemble revient donc à un opérateur humain. Or, dans le cas d'un supercalculateur de dimension importante, cette tâche consiste à effectuer une sélection parmi un extrêmement grand nombre de sondes disponibles. Ce nombre peut atteindre plusieurs dizaines de millions de sondes ou compteurs.

Il en découle que cette tâche est extrêmement complexe pour un opérateur humain, et qu'il est quasi-impossible de définir un sous-ensemble pertinent optimal.

En outre, un autre problème auquel peut faire face l'opérateur est l'hétérogénéité des dispositifs fournissant des informations à analyser. En effet, en sus des sondes et compteurs, le supercalculateur peut également être associé ou comporter des outils de gestion et de surveillance de natures variées. Ces outils peuvent permettre d'obtenir une vue selon un critère particulier par exemple, ou bien être intégré ou associé à un équipement particulier du supercalculateur.

Pour analyser l'état du supercalculateur, l'opérateur doit donc être en mesure d'inter-opérer avec des différents outils, et, là encore, de sélectionner les informations dont il a besoin dans sa tâche de surveillance.

Par conséquent, la montée en puissance et en complexité des supercalculateurs posent au moins deux problèmes techniques :
- d'une part, il devient de plus en plus complexe d'effectuer une surveillance selon la méthodologie de l'état de l'art ;
- d'autre part, la surveillance est devenue un problème plus crucial, car l'augmentation de la complexité des architectures de supercalculateur multiplie les sources potentielles de problèmes pouvant les impacter. Le document WO-A1-2015/020648 décrit un procédé pour la surveillance d'une architecture de calculateur comprenant l'affichage de données de topologie et la mise en correspondance de ces données de topologie avec des informations issues d'un événement.

Le but de la présente invention est de fournir un procédé et un système palliant au moins partiellement les inconvénients précités et permettant notamment de résoudre ce double problème technique.

### RESUME DE L'INVENTION

A cette fin, la présente invention propose un procédé pour la surveillance d'une architecture de supercalculateur comportant une pluralité d'équipements, ledit procédé comportant :
- Une étape de réception d'un événement relatif à des sondes associées auxdits équipements ;
- Une étape de détermination d'informations sur au moins un équipement en fonction de données contenues dans ledit événement ;
- Une étape d'agrégation consistant à déterminer des secondes informations à partir desdites informations sur au moins un équipement, et en fonction de données sur la topologie de ladite architecture de supercalculateur, et en fonction d'informations provenant d'un ensemble d'équipements déterminé à partir desdites données sur la topologie ;
- Une étape de transmission desdites secondes informations vers au moins un outil de visualisation de données de supervision.

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdites secondes informations sont déterminées également à partir de données de sondes associées audit ensemble d'équipement ;
- lesdites secondes informations sont transmises à un service web.

Un autre aspect de l'invention concerne un programme d'ordinateur comportant des moyens logiciels adaptés à la mise en œuvre du procédé tel que précédemment décrit, lorsque que déclenché par une plateforme de traitement de l'information.

Un autre aspect de l'invention concerne un système de surveillance pour la surveillance d'une architecture de supercalculateur comportant une pluralité d'équipements, ledit système de surveillance comportant :
- Un module d'analyse d'événements adapté pour la réception d'un événement relatif à des sondes associées auxdits équipements et pour la détermination d'informations sur au moins un équipement en fonction de données contenues dans ledit événement ;
- Un module d'agrégation d'informations adapté pour déterminer des secondes informations à partir desdites informations sur au moins un équipement, et en fonction de données sur la topologie de ladite architecture de supercalculateur, et en fonction d'informations provenant d'un ensemble d'équipements déterminé à partir desdites données sur la topologie ;
- Un module de transmission d'informations, adapté pour la transmission desdites secondes informations vers au moins un outil de visualisation de données de supervision.

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdites secondes informations sont déterminées également à partir de données de sondes associées audit ensemble d'équipement ;
- lesdites données sur la topologie sont fournies par un gestionnaire de topologie ;

Un autre aspect de l'invention concerne un système comportant un système de surveillance tel que précédemment décrit et un supercalculateur.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

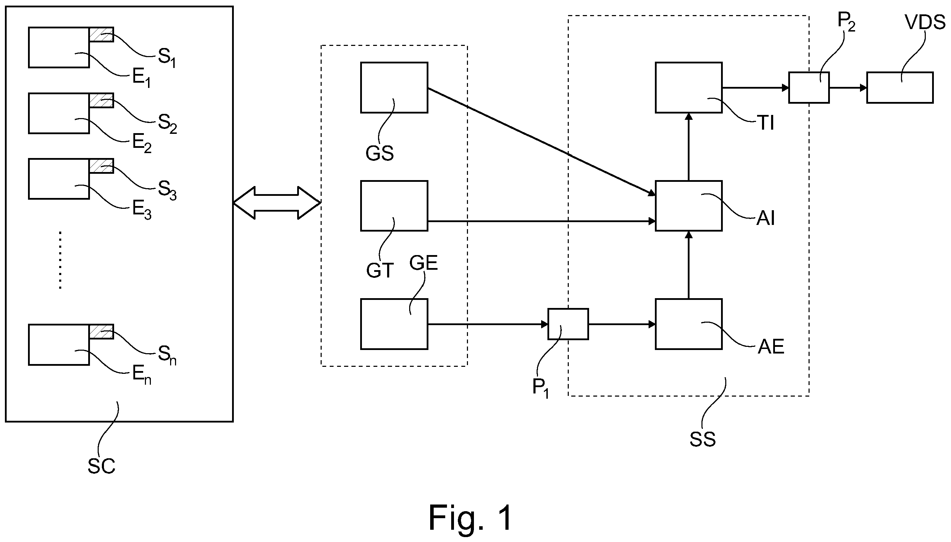

La figure 1 représente schématiquement un exemple d'architecture comportant un supercalculateur et un système de surveillance, selon un mode de réalisation de l'invention.

### DESCRIPTION DETAILLEE DE L'INVENTION

Sur la figure 1, un contexte global est représenté dans lequel est mis en œuvre un mode de réalisation de l'invention. Ce contexte est considéré comme assez général, mais l'invention est susceptible d'être mise en œuvre selon d'autres modes de réalisation également, pouvant ne pas entrer dans le cadre de ce contexte illustratif.

Un supercalculateur SC comporte une pluralité d'équipements E1, E2, E3... En. L'invention s'applique aux supercalculateurs de grande puissance, comprenant donc un nombre important d'équipements. Ce nombre peut donc être de l'ordre de plusieurs centaines de milliers, voire de plusieurs millions d'équipements.

Les équipements peuvent être des nœuds de traitement, comportant un ou plusieurs microprocesseurs, un ensemble de mémoires, etc., destinés à effectuer les tâches de traitement proprement dites, confiées au supercalculateur.

Les équipements peuvent également être des nœuds de routage, permettant d'acheminer les données de façon appropriée au sein du supercalculateur.

Il peut également s'agir de nœuds de gestion, permettant de gérer cet acheminement et la répartition d'une tâche au sein de l'ensemble des nœuds de traitement.

Ces équipements sont interconnectés et forment donc un réseau selon une topologie déterminée à l'avance, voire adaptable.

De cette façon, les tâches de traitement confiées au supercalculateur SC peuvent être traitées sur un ensemble de nœuds de traitement selon différents modes de fonctionnement (parallélisme massif, « pipeline », etc.).

Des sondes S1, S2, S3... Sn sont également déployées au sein du supercalculateur.

Ces sondes sont associées aux équipements. Différentes configurations sont possibles : une sonde peut être associée à un unique équipement, ou bien à plusieurs équipements ; un équipement donné peut être associé à une sonde unique, ou bien à plusieurs sondes. Ainsi, la figure 1 illustre un mode de réalisation typique dans lequel est mise en place une relation 1-1 entre les sondes et les équipements, mais plus généralement, des relations N-M peuvent éventuellement être mises en place entre sondes et équipements constitutifs du supercalculateur SC.

On appelle ici « sonde » toute entité permettant de mesurer des informations de fonctionnement ou d'état d'un ou plusieurs équipements et de les communiquer en dehors du supercalculateur. Une sonde peut donc être un module logiciel intégré à l'équipement associé, ou bien un appareillage matériel ou bien une combinaison des deux.

Une sonde peut être un simple compteur, qui mesure en temps-réel une quantité liée à l'équipement associé : un taux d'erreurs, une température, une charge, etc.

Certains équipements peuvent être associés à des systèmes de gestion et/ou surveillance plus évolués qui peuvent fournir des informations de nature plus complexe. Dans la mesure où l'invention peut s'appliquer tant aux compteurs les plus simples et basiques qu'aux systèmes de gestion les plus évolués, les deux catégories, ainsi que les solutions intermédiaires, sont regroupées dans la suite du texte sous le terme « sonde ».

Les outils de gestion d'un supercalculateur comprennent en général : un générateur d'événement EG, un gestionnaire de topologie GT, et un gestionnaire de sondes GS.

Le générateur d'événements GE fonctionne en collaboration avec les différentes sondes S1, S2, S3... Sn afin de générer un événement, ou notification, lorsque les valeurs prises par une ou plusieurs sondes correspondent à des critères déterminés. Les événements générés par le générateur d'événements GE sont déclenchés par les valeurs prises par les sondes S1, S2, S3... Sn. Des événements peuvent également être déclenchés par l'opérateur humain, concernant certains équipements et/ou sondes..

Principalement, deux types de sources peuvent générer des événements depuis un équipement :
- une panne ou une dégradation matérielle (panne de port, problème d'alimentation, câble défectueux...) ;
- des erreurs trop nombreuses et répétées pendant un intervalle de temps défini.

Très souvent, l'utilisateur peut déclencher l'action, via un événement, car il souhaite consulter et afficher certains compteurs de certains équipements.

Un gestionnaire de topologie GT est également disponible afin de mémoriser la topologie de l'architecture du supercalculateur, c'est-à-dire l'identité des équipements et leurs interconnexions. Ainsi, en interrogeant le gestionnaire de topologie, il est possible, à tout moment de connaître la façon dont les équipements sont connectés entre eux et donc, pour un équipement donné, quels sont ses « voisins topologiques », c'est-à-dire ceux auxquels ils sont connectés (de façon physique ou logique).

Le supercalculateur SC peut également être associé à un gestionnaire de sondes GS. Ce dispositif permet d'assurer une interface vers les sondes S1, S2, S3... Sn et à une application tierce de pouvoir accéder à leurs valeurs, au moyen d'un protocole déterminé.

Le gestionnaire de sondes GS, le gestionnaire de topologie GT et le générateur d'événements GE peuvent être spécifiques au supercalculateur. Leurs fonctionnalités et leurs modes d'utilisation peuvent donc fortement varier d'un fabriquant à l'autre. D'une façon générale, il peut s'agir de dispositifs de l'état de la technique qui, comme il a été dit préalablement, ne peuvent pas permettre directement un affichage organisé des informations pertinentes, tel que le propose l'invention.

L'invention réside dans le système de surveillance SS qui prend en entrée les informations fournies par le générateur d'événements GE, par le gestionnaire de topologie GT et par le gestionnaire de sondes GE. Le système de surveillance SS peut éventuellement accéder directement aux sondes S1, S2, S3... Sn, selon certains modes de réalisation de l'invention.

Le système de surveillance selon l'invention comporte un module d'analyse d'événements AE, un module d'agrégation d'informations AI et un module de transmission d'information TI. Ces modules sont des modules fonctionnels : concrètement, ils peuvent être mis en œuvre par des dispositifs, notamment des applications logicielles, distinctes, ou bien par un seul dispositif, ou application logicielle, regroupant ces trois fonctions sous des formes indépendantes ou non. La division en trois modules fonctionnels permet un exposé plus clair des mécanismes de l'invention et sera conservée dans la suite.

Le module d'analyse d'événements permet de recevoir les événements générés par le générateur d'événements GE. A la réception d'un événement, l'analyse d'événements AE lit les données contenues dans cet événement.

Selon un mode de réalisation de l'invention, un adaptateur peut être inséré entre le générateur d'événements GE et le module d'analyse d'événements AE afin de traduire les données fournies par les événements dans un format compréhensible par le module d'analyse d'événements AE. Cet adaptateur peut prendre la forme d'un module indépendant ou « plug-in» P1. Un plug-in peut être conçu pour chaque type de générateurs d'événements GE. Ainsi, pour chaque fabriquant de supercalculateur disposant de ses propres outils de gestion et notamment d'un gestionnaire d'événements GE, on peut concevoir un module plug-in P1 adapté pour transformer les événements générés et leurs donnés dans un format « universel » adapté au système de surveillance SS.

A partir de ces données extraites de l'événement reçu, le module d'analyse d'événements détermine des informations sur le ou les équipements concernés. Ce (ou ces) équipements sont typiquement ceux à l'origine de l'événement. Ces informations peuvent comprendre un identifiant de l'équipement, et des informations provenant de la (ou des) sonde associée à l'équipement. Ces dernières informations peuvent contenir un identifiant de sonde (représentatif de ce qui est mesuré), une valeur, et une unité.

Par exemple, si un événement est déclenché par un seuil franchi par un compteur S1 associé à un équipement E1, le module d'analyse d'événement peut récupérer comme information, l'identifiant (ou nom) de l'équipement E1, un identifiant de la sonde S1 et/ou un identifiant de la quantité mesurée par la sonde (par exemple, un taux d'erreur, une charge, une consommation électrique...), une valeur et une unité.

Ces informations peuvent ensuite être mises en forme selon un format déterminé et transmises au module d'agrégation d'informations AI. Ce module a pour but d'agréger l'information transmise par le module d'analyse d'événements AE.

Cette étape mise en œuvre par le module d'agrégation peut consister à agréger ces informations venant des événements, avec des données sur la topologie de l'architecture du supercalculateur SC. Ces données de topologie (ou données topologiques) SC peuvent provenir du gestionnaire de topologie GT.

Ainsi, les informations reçues via un événement peuvent contenir un premier ensemble d'équipements. Ce premier ensemble peut être un singleton, si l'événement ne concerne qu'un unique équipement Ei.

Ce premier ensemble est « projeté » dans la topologie de l'architecture afin de déterminer un second ensemble, englobant ce premier ensemble et des équipements voisins. La notion de voisinage peut dépendre d'une distance par exemple, permettant ainsi de définir qu'on s'intéresse aux voisins immédiats uniquement, ou bien à des voisins situés à N sauts des équipements du premier ensemble.

Cette projection et la détermination de ce second ensemble peut être fait en adressant des requêtes au gestionnaire de topologie GT afin de remonter vers le module d'agrégation d'informations les voisins de chaque équipement du premier ensemble, puis d'en faire une union ensembliste.

Le module d'agrégation d'informations peut ensuite rechercher des valeurs fournies par des sondes associées aux équipements de ce second ensemble. Pour ce faire, il peut interroger le gestionnaire de sondes GS.

Sur la base des valeurs de sondes, il peut alors ne retenir qu'une partie des équipements et en écarter d'autres.

Par exemple, il peut ne retenir que les équipements possédant des sondes homogènes avec le (ou les) équipements relatifs à l'événement. Ainsi, si un événement concerne un problème relatif à une charge trop importante, il peut être inutile de considérer un équipement, même voisin, pour lequel seule une sonde sur la consommation électrique est disponible. Par contre, des informations sur le routage pourront être pertinentes, afin de déterminer la cause et les conséquences de ce problème.

D'autres mécanismes de filtrage peuvent être mis en place pour déterminer ce second ensemble d'équipements, et un ensemble de sondes associées et de valeurs de sondes.

Par exemple, des mécanismes de règles ou d'apprentissage peuvent être mis en place pour mettre en correspondance des événements et des motifs d'équipements/sondes corrélés. Par exemple, des règles ou mécanismes d'apprentissage peuvent fournir des seconds ensembles types d'équipements ou des règles pour les déterminer.

De la sorte, le module d'agrégation d'informations peut déterminer des secondes informations, construites à partir
- des informations déterminées par le ou les événements reçus, et
- à partir des données sur la topologie de l'architecture du supercalculateur, et,
- à partir de données de sondes associées à des équipements d'un ensemble déterminé à partir des données sur la topologie.

D'une façon générale, on permet ainsi de déterminer, le cas échéant, quels pourraient être les équipements qu'il serait intéressant de regarder, en complément de ceux initiaux.

Par exemple, si un équipement remonte un problème de température trop élevé, il peut être intéressant d'avoir sa courbe de température ainsi que celles de ses proches voisins, afin de vérifier s'il y a un problème, plus global (panne de climatisation, par exemple).

Les secondes informations, ainsi déterminées, peuvent être transmises à un module de transmission d'information TI. Le but de ce module fonctionnel est de formater, de structurer, les secondes informations, et d'offrir une ou des interfaces permettant à des outils de visualisation de données de supervision VDS d'accéder aux secondes informations.

Différents outils peuvent ainsi recueillir les informations disponibles en s'interfaçant avec le module de transmission de l'information TI du système de surveillance SS selon l'invention.

Afin de permettre une interopérabilité accrue, un module de traduction P2, de type « plug-in », peut être inséré en aval du module de transmission de l'information TI, afin d'adapter les secondes informations à tout format imaginable.

Il peut ainsi être possible de proposer une exportation des informations non seulement vers des outils de visualisation de données de surveillance VDS proprement dits, mais aussi par des services web (via par exemple une représentation en métalangage XML), etc.

Ainsi, l'invention permet une configuration plus aisée et automatique des outils de visualisation de données de supervision. Cette configuration peut être adaptée au contexte, c'est-à-dire aux événements reçus.

Notamment, elle permet à la fois de limiter l'information transmise à un sous-ensemble pertinent en fonction du contexte, et d'autre part de l'enrichir avec d'autres informations pertinentes. Le système de surveillance selon l'invention utilise pour ce faire les données topologiques, qui lui permettent d'enrichir les informations et de déterminer les informations les plus pertinentes.

La notion de pertinence peut faire l'objet de paramétrage et de mécanismes d'apprentissage permettant ainsi au système de surveillance d'atteindre des performances importantes.

Par conséquent, l'opérateur peut réagir aux événements émis par le supercalculateur, ou simplement procéder à des surveillances de son propre chef, de façon plus rapide et efficace. Il pourra plus rapidement déceler et comprendre un problème survenant sur le supercalculateur, et également en déterminer une cause possible.

Bien entendu, la présente invention n'est pas limitée aux exemples et au mode de réalisation décrits et représentés, mais elle est susceptible de nombreuses variantes accessibles à l'homme de l'art.

## Revendications

1. Procédé pour la surveillance d'une architecture de supercalculateur (SC) comportant une pluralité d'équipements (E1, E2, E3... En), comportant :
- Une étape de réception d'un événement relatif à des sondes (S1, S2, S3... Sn) associées auxdits équipements ;
- Une étape de détermination d'informations sur au moins un équipement en fonction de données contenues dans ledit événement ;
- Une étape d'agrégation consistant à déterminer des secondes informations à partir desdites informations sur au moins un équipement, en fonction de données sur la topologie de ladite architecture de supercalculateur, et en fonction d'informations provenant d'un ensemble d'équipements déterminé à partir desdites données sur la topologie ;
- Une étape de transmission desdites secondes informations vers au moins un outil de visualisation de données de supervision.

2. Procédé selon la revendication précédente, dans lequel lesdites secondes informations sont déterminées également à partir de données de sondes associées audit ensemble d'équipement.

3. Procédé selon l'une des revendications précédentes, dans lequel lesdites secondes informations sont transmises à un service web.

4. Programme d'ordinateur comportant des moyens logiciels adaptés à la mise en œuvre du procédé selon l'une des revendications précédentes lorsque que déclenché par une plateforme de traitement de l'information.

5. Système de surveillance (SS) pour la surveillance d'une architecture de supercalculateur (SC) comportant une pluralité d'équipements (E1, E2, E3... En), comportant
- Un module d'analyse d'événements (AE) adapté pour la réception d'un événement relatif à des sondes (S1, S2, S3...Sn) associés auxdits équipements et pour la détermination d'informations sur au moins un équipement en fonction de données contenues dans ledit événement ;
- Un module d'agrégation d'informations (AI) adapté pour déterminer des secondes informations à partir desdites informations sur au moins un équipement, et en fonction de données sur la topologie de ladite architecture de supercalculateur, et en fonction d'informations provenant d'un ensemble d'équipements déterminé à partir desdites données sur la topologie ;
- Un module de transmission d'information (TI), adapté pour la transmission desdites secondes informations vers au moins un outil de visualisation de données de supervision.

6. Système de surveillance (SS) selon la revendication précédente, dans lequel lesdites secondes informations sont déterminées également à partir de données de sondes associées audit ensemble d'équipement.

7. Système de surveillance (SS) selon l'une des revendications précédentes 5 ou 6, dans lequel lesdites données sur la topologie sont fournies par un gestionnaire de topologie (GT).

8. Système comportant un système de surveillance selon l'une des revendications 5 à 7 et un supercalculateur (SC).

## Patentansprüche

1. Verfahren zur Überwachung einer Architektur eines Superrechners (SC), der eine Vielzahl von Einrichtungen (E1, E2, E3, ..., En) umfasst, umfassend:
- einen Schritt des Empfangs eines Ereignisses, das sich auf Fühler (S1, S2, S3, ..., Sn) bezieht, die den Einrichtungen zugeordnet sind;
- einen Schritt der Bestimmung von Informationen über wenigstens eine Einrichtung in Abhängigkeit von Daten, die in dem Ereignis enthalten sind;
- einen Schritt der Aggregation, der darin besteht, zweite Informationen aus den Informationen über wenigstens eine Einrichtung, in Abhängigkeit von Daten über die Topologie der Superrechnerarchitektur und in Abhängigkeit von Informationen, die von einer aus den Daten über die Topologie bestimmten Gesamtheit von Einrichtungen stammen, zu bestimmen;
- einen Schritt der Übertragung der zweiten Informationen an wenigstens ein Tool zur Visualisierung von Überwachungsdaten.

2. Verfahren nach dem vorhergehenden Anspruch, wobei die zweiten Informationen auch aus Daten von Fühlern bestimmt werden, die der Gesamtheit von Einrichtungen zugeordnet sind.

3. Verfahren nach einem der vorhergehenden Ansprüche, wobei die zweiten Informationen an einen Webdienst übertragen werden.

4. Computerprogramm, welches Softwaremittel umfasst, die für die Durchführung des Verfahrens nach einem der vorhergehenden Ansprüche, wenn es von einer Plattform zur Verarbeitung der Informationen ausgelöst wird, ausgelegt sind.

5. Überwachungssystem (SS) zur Überwachung einer Architektur eines Superrechners (SC), der eine Vielzahl von Einrichtungen (E1, E2, E3, ..., En) umfasst, umfassend:
- ein Ereignisanalysemodul (AE), das für den Empfang eines Ereignisses, das sich auf Fühler (S1, S2, S3, ..., Sn) bezieht, die den Einrichtungen zugeordnet sind, und für die Bestimmung von Informationen über wenigstens eine Einrichtung in Abhängigkeit von Daten, die in dem Ereignis enthalten sind, ausgelegt ist;
- ein Informationsaggregationsmodul (AI), das dafür ausgelegt ist, zweite Informationen aus den Informationen über wenigstens eine Einrichtung und in Abhängigkeit von Daten über die Topologie der Superrechnerarchitektur und in Abhängigkeit von Informationen, die von einer aus den Daten über die Topologie bestimmten Gesamtheit von Einrichtungen stammen, zu bestimmen;
- ein Informationsübertragungsmodul (TI), das für die Übertragung der zweiten Informationen an wenigstens ein Tool zur Visualisierung von Überwachungsdaten ausgelegt ist.

6. Überwachungssystem (SS) nach dem vorhergehenden Anspruch, wobei die zweiten Informationen auch aus Daten von Fühlern bestimmt werden, die der Gesamtheit von Einrichtungen zugeordnet sind.

7. Überwachungssystem (SS) nach einem der vorhergehenden Ansprüche 5 oder 6, wobei die Daten über die Topologie von einem Topologiemanager (GT) geliefert werden.

8. System, welches ein Überwachungssystem nach einem der Ansprüche 5 bis 7 und einen Superrechner (SC) umfasst.

## Claims

1. Method for monitoring a supercomputer (SC) architecture comprising a plurality of equipment items (E1, E2, E3... En), comprising:
- a step of reception of an event relating to probes (S1, S2, S3...Sn) associated with said equipment items;
- a step of determination of information items on at least one equipment item based on data contained in said event;
- an aggregation step consisting in determining second information items from said information items on at least one equipment item, based on data on the topology of said supercomputer architecture, and based on information items originating from a set of equipment items determined from said data on the topology;
- a step of transmission of said second information items to at least one supervision data viewing tool.

2. Method according to the preceding claim, in which said second information items are determined also from data from probes associated with said set of equipment items.

3. Method according to one of the preceding claims, in which said second information items are transmitted to a web service.

4. Computer program comprising software means suitable for implementing the method according to one of the preceding claims, when triggered by an information processing platform.

5. Monitoring system (SS) for monitoring a supercomputer (SC) architecture comprising a plurality of equipment items (E1, E2, E3...En), comprising
- an event analysis module (AE) suitable for receiving an event relating to probes (S1, S2, S3...Sn) associated with said equipment items and for determining information items on at least one equipment item based on data contained in said event;
- an information aggregation module (AI) suitable for determining second information items from said information items on at least one equipment item, and based on data on the topology of said supercomputer architecture, and based on information items originating from a set of equipment items determined from said data on the topology;
- an information transmission module (TI), suitable for transmitting said second information items to at least one supervision data viewing tool.

6. Monitoring system (SS) according to the preceding claim, in which said second information items are determined also from data from probes associated with said set of equipment items.

7. Monitoring system (SS) according to one of the preceding Claims 5 or 6, in which said data on the topology are supplied by a topology manager (GT).

8. System comprising a monitoring system according to one of Claims 5 to 7 and a supercomputer (SC).
